# EUROPEAN PATENT SPECIFICATION

(11) **EP 1 981 104 B1**
(45) Date of publication and mention of the grant of the patent: **12.10.2011**
(21) Application number: 07707918.4
(22) Date of filing: 26.01.2007
(51) Int. Cl.: H01M 4/133, H01M 4/587, H01M 10/0525

(54) **NEGATIVE ELECTRODE MATERIAL FOR LITHIUM ION SECONDARY BATTERY AND PROCESS FOR PRODUCING THE SAME**
NEGATIV-ELEKTRODENMATERIAL FÜR EINE LITHIUMIONEN-SEKUNDÄRBATTERIE UND HERSTELLUNGSPROZESS DAFÜR
MATÉRIAU D'ÉLECTRODE NÉGATIVE POUR ACCUMULATEUR À L'ION LITHIUM ET SON PROCÉDÉ DE PRODUCTION

(30) Priority: 30.01.2006 JP 2006019973
(43) Date of publication of application: 15.10.2008
(73) Proprietor: Tokai Carbon Company, Ltd., Minato-ku, Tokyo 107-8636 (JP)
(72) Inventor: YAMAMOTO, Masatake, Tokyo 107-8636 (JP); DOHZONO, Mitsuaki, Tokyo 107-8636 (JP)
(74) Representative: Müller-Wolff, Thomas
(86) International application number: PCT/JP2007/051742
(87) International publication number: WO 2007/086603

(56) References cited:
- JP-A- 09 147 839
- JP-A- 2000 294 283
- JP-A- 2001 076 723
- JP-A- 2002 042 786
- JP-A- 2003 173 778
- US-A1- 2001 014 422

## Description

### TECHNICAL FIELD

The present invention relates to a negative electrode material for lithium-ion secondary batteries that allows large-current charging/discharging, and a process of producing the same.

### BACKGROUND ART

A lithium-ion secondary battery (i.e., non-aqueous electrolyte secondary battery) utilizing an organic lithium salt electrolyte has a reduced weight and a high energy density. Therefore, the lithium-ion secondary battery has been expected to be a power supply for small portable instruments, a power storage battery, and the like. Lithium metal has been used as a negative electrode material for lithium secondary batteries. Lithium metal is dissolved in an electrolyte as lithium ions during discharging, and lithium ions precipitate on the surface of the negative electrode as lithium metal during charging. It is difficult to cause lithium ions to smoothly precipitate to recover the original state (i.e., lithium ions tend to precipitate in the form of a dendrite). Since the dendrite decomposes the electrolyte due to very high activity, the battery performance decreases, whereby the charging/discharging cycle life decreases. Moreover, the dendrite may grow to reach the positive electrode so that the electrodes may be short-circuited.

In order to overcome the above-mentioned drawbacks, use of a carbon material instead of lithium metal has been proposed. Since a carbon material does not allow lithium ions to precipitate in the form of a dendrite during storage or release of lithium ions, a carbon material is suitable as the negative electrode material. Specifically, a graphite material has high lithium-ion storage/release capability so that a storage/release reaction occurs promptly. Therefore, a graphite material ensures a high charging/discharging efficiency, has a theoretical capacity as high as 372 mAh/g, and enables production of a high-voltage battery due to a potential almost equal to that of lithium metal during charging/discharging, for example.

A graphite material that is highly graphitized and has a highly developed hexagonal carbon structure has a large capacity and ensures a high initial efficiency of 90% or more. On the other hand, a graphite material has a flat potential curve during discharging, thereby making it difficult to determine the discharge end point Moreover, since a large amount of current cannot be discharged In a short time when using a graphite material, the rate profile deteriorates, for example.

Various attempts have been made to solve the above-mentioned problems, such as improving the properties of a carbon material such as a graphite material (e.g., a carbon material having a two-layer structure obtained by covering the surface of a graphite material having a high degree of graphitization with a carbonaceous substance having a low degree of graphitization), or combining a graphite material having a high degree of graphitization with a carbonaceous substance having a low degree of graphitization.

For example, JP-A-4-368778 discloses a carbon negative electrode for secondary batteries obtained by covering the surface of carbon (active material) that comes in contact with an electrolyte with amorphous carbon, wherein the amorphous carbon has a turbostratic structure, an average interlayer spacing in the C-axis direction of 0.337 to 0.360 nm, and a peak intensity ratio of 1360 cm^{- 1} to 1580 cm⁻¹ in an argon laser Raman spectrum of 0.4 to 1.0.

JP-A-6-267531 discloses an electrode material having a multilayer structure obtained by mixing particles of a carbonaceous substance (A) which satisfies the following condition (1) with particles of an organic compound (B) which satisfies the following condition (2), and carbonizing the organic compound (B) by heating the mixture so that the particles of the carbonaceous substance (A) are covered with a carbonaceous substance (C) which satisfies the following condition (3).
(1) d002 determined by wide-angle X-ray diffraction is 3.37 angstroms or less, the true density is 2.10 g/cm³ or more, and the volume average particle diameter is 5 µm or more.
(2) The volume average particle diameter is smaller than that of the carbonaceous substance (A).
(3) d002 determined by wide-angle X-ray diffraction is 3.38 angstroms or more, a peak PA exists in the range of 1580 to 1620 cm⁻¹ and a peak PB exists in the range of 1350 to 1370 cm⁻¹ when determined by Raman spectrum analysis using argon ion laser light, and the ratio R (IB/IA) of the intensity IB at the peak PB to the intensity IA at the peak PA is 0.2 or more.

JP-A-9-073903 discloses a negative electrode material for lithium secondary batteries wherein a lithium carrier is formed of a composite carbonaceous powder prepared by mixing resinous coal particles with a highly crystalline graphite powder in an amount of 5 to 30 wt%, carbon black having a DBP absorption of 100 ml/100 g or more being dispersed in the resinous coal particles. Since this negative electrode material utilizes a non-graphitizable carbon substance obtained by combining a resin carbide with carbon black and a highly graphitized substance in combination, lithium clusters are formed between hexagonal graphite layers so that lithium is irreversibly consumed to increase loss. As a result, the initial discharge efficiency decreases.

JP-A-2001-332263 discloses a lithium-ion secondary battery wherein the negative electrode contains graphite having a ratio Gs (Hsg/Hsd) in a surface-enhanced Raman spectrum of 10 or less. JP-A-2001-332263 also discloses a process of producing a carbon negative electrode material which includes a step of mixing a carbon-based material formed of at least either mesocarbon microbeads grown at a temperature equal to or higher than the formation temperature and equal to or lower than 2000°C or a carbon material with a coating material formed of at least one of pitch containing free carbon, pitch having a quinoline insoluble content of 2% or more, and a polymer, and a step of graphitizing the mixture. However, JP-A-2001-332263 does not aim at utilizing the high rate profile of carbon black since the carbon-based material is produced at a high temperature.

US2001/014422 discloses a negative electrode material for lithium-ion secondary batteries comprising composite particles including graphite powder particles, carbon black, and a pitch carbide, obtainable from a process of mixing a powder, the mixed powder being prepared by mixing graphite powder particles with carbon black in a weight ratio range.

### DISCLOSURE OF THE INVENTION

Along with an improvement in performance of portable telephones, notebook personal computers, and the like for which a lithium-ion secondary battery is mainly used, a more excellent rate profile has been desired. Regarding lithium-ion secondary batteries used for hybrid cars and electric vehicles, it is important to improve the charging-side rate profile.

The present invention was conceived in order to solve the above-mentioned problems relating to the negative electrode material for lithium-ion secondary batteries. An object of the present invention is to provide a negative electrode material for lithium-ion secondary batteries that effectively utilizes the excellent rate profile of carbon black and has a high reversible capacity and a high initial efficiency, and a process of producing the same.

A negative electrode material for lithium-ion secondary batteries according to the present invention that achieves the above object comprises composite particles according to claim 1.

A process of producing a negative electrode material for lithium-ion secondary batteries according to the present invention comprises a process according to claim 2.

It is preferable that the graphite powder particles have a crystallite size Lc(004) in a C-axis direction of 100 nm or more and a (002) interlayer spacing d(002) of less than 0.336 nm. It is preferable that the carbon black have an arithmetic average particle diameter of 50 to 200 nm and a DBP absorption of 40 to 155 ml/100 g.

The negative electrode material for lithium-ion secondary batteries according to the present invention enables provision of a lithium-ion secondary battery which has a reversible capacity of 250 mAh/g or more, an initial efficiency of 80% or more, and a sufficient rate profile and allows large-current charging/discharging.

The negative electrode material for lithium-ion secondary batteries can be produced by mixing a mixed powder with pitch in a specific ratio, the mixed powder being prepared by mixing graphite powder particles having specific particle properties with carbon black in a specific weight ratio, kneading the mixture, and carbonizing the kneaded product by firing or further graphitizing the kneaded product.

Note that the term "reversible capacity" refers to the amount of electricity that can be charged/discharged reversibly. The term "initial efficiency" refers to the ratio of the discharge capacity to the initial charge capacity by a constant-current charging/discharging process. The initial efficiency (%) is defined by "(initial discharge capacity)/(initial charge capacity)×100". The term "rate profile" refers to an index that indicates durability to large-current discharging. The rate profile is indicated by a value obtained by dividing the amount of electricity discharged with a large current by the amount of electricity discharged with a small current When the rate profile is insufficient, the negative electrode material cannot be used for applications for which a large current is required.

### BRIEF DESCRIPTION OF THE DRAWINGS

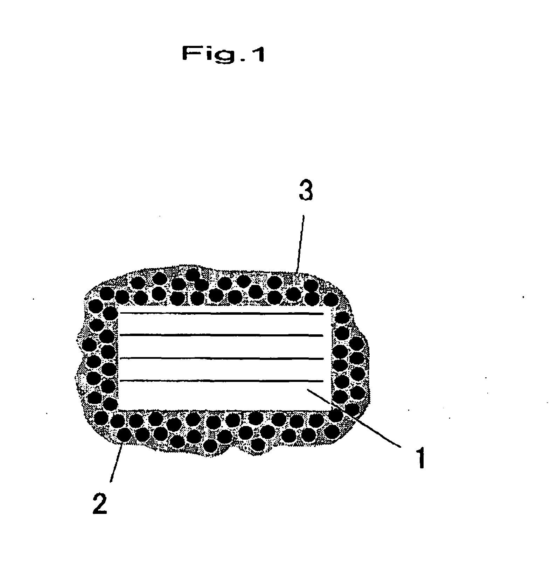

FIG. 1 is a schematic view showing the structure of a composite particle.

### BEST MODE FOR CARRYING OUT THE INVENTION

The negative electrode material for lithium-ion secondary batteries according to the present invention includes composite particles produced by covering graphite powder particles (core material) with carbon black and a carbonized pitch. . FIG. 1 schematically shows the structure of the composite particle. In FIG. 1, reference numeral 1 indicates a graphite powder particle (core material). The graphite powder particle 1 is covered with carbon black powder particles 2 and a carbonized pitch (or graphitized pitch) 3 to form a particle having a composite structure.

The present invention is characterized in that the composite particles have an average particle diameter D50 of 8 to 15 µm and a specific surface area of 15 m²/g or less. If the average particle diameter D50 of the composite particles is less than 8 µm, it may be difficult to increase the density of the negative electrode material. Therefore, the amount of composite particles which can be provided in a battery container with a specific volume may decrease, whereby the capacity of the battery may decrease. If the average particle diameter D50 of the composite particles Is more than 15 µm, the interface between the composite particles and an electrolyte (i.e., an area through which lithium ions enter or exit the composite particles) may decrease, whereby the rate profile may decrease. If the specific surface area of the composite particles is more than 15 m²/g, the reactivity of the composite particles with an electrolyte may increase, whereby the initial efficiency may decrease.

A lithium-ion secondary battery which has a high reversible capacity of more than 250 mAh/g and an excellent initial efficiency of 80% or more while effectively utilizing the excellent rate profile of carbon black is provided by forming a negative electrode material for the lithium-ion secondary battery using the above-described composite particles.

A negative electrode material for lithium-ion secondary batteries using the above-described composite particles may be produced by mixing a mixed powder with pitch in a specific ratio, the mixed powder being prepared by mixing graphite powder particles having specific particle properties with carbon black in a specific weight ratio, sufficiently kneading the mixture, and carbonizing the kneaded product by firing or further graphitizing the kneaded product.

As the graphite powder particles, artificial or natural graphite powder particles having an average particle diameter D50 of 3 to 10 µm and a standard deviation from the average particle diameter D50 of 0.2 µm or less are used. The particle properties of the graphite powder particles are adjusted by grinding graphite using an appropriate grinder (e.g., vibrating ball mill, jet grinder, roller mill, or impact grinder), and adjusting the grain size of the ground product.

The graphite powder particle serves as the core of the composite particle which forms the negative electrode material according to the present invention. If the average particle diameter D50 of the graphite powder particles is less than 3 µm, the average particle diameter of the composite particles may also decrease. As a result, loss may increase due to an increase in specific surface area. If the average particle diameter D50 of the graphite powder particles is more than 10 µm, the average particle diameter of the composite particles may also increase. As a result, a sufficient rate profile may not be obtained. The maximum particle diameter of the graphite powder particles is preferably 20 µm or less, and the minimum particle diameter of the graphite powder particles is preferably 1 µm or more. If the standard deviation from the average particle diameter is more than 0.2 µm, the percentage of a fine powder in an arbitrary particle size distribution may increase. As a result, the specific surface area and loss may increase.

It is preferable that the graphite powder particles have a crystallite size Lc(004) in the C-axis direction of 100 nm or more and a (002) interlayer spacing d(002) of less than 0.336 nm. As a result, a lithium secondary battery having a reversible capacity of more than 250 mAh/g is obtained.

It is preferable that the carbon black have an arithmetic average particle diameter of 50 to 200 nm and a DBP absorption of 40 to 155 ml/100 g. If the arithmetic average particle diameter of the carbon black is less than 50 nm, the specific surface area of the composite particles may increase. As a result, the reactivity of the composite particles with the electrolyte may increase, whereby the initial efficiency may decrease. If the arithmetic average particle diameter of the carbon black is more than 200 nm, the rate profile may deteriorate. If the DBP absorption of the carbon black is less than 40 ml/100 g, an improvement in rate profile may become insufficient. If the DBP absorption of the carbon black is more than 155 ml/100 g, the amount of pitch required to produce the composite particles may increase. This may make it difficult to produce the composite particles using the pitch in an amount defined by the present invention.

The graphite powder particles and the carbon black are mixed in a weight ratio of 1:1.5 to 3.0 to prepare a mixed powder. If the weight ratio of the carbon black is less than 1.5, the amount of carbon black that covers the graphite powder particle (core material) may become insufficient when producing the composite particle shown in FIG. 1. As a result, the surface of the graphite powder particle may not be sufficiently covered, whereby an improvement in rate profile may become insufficient.

If the weight ratio of the carbon black is more than 3.0, the amount of carbon black that covers the graphite powder particle may increase, whereby the reversible capacity of the graphite particle may be impaired. As a result, the reversible capacity of the negative electrode material for lithium ion secondary batteries may decrease. Moreover, since the specific surface area may increase due to the carbon black, loss during charging/discharging may increase, whereby the initial efficiency may decrease.

100 parts by weight of the mixed powder is mixed with 30 to 120 parts by weight of pitch from which free carbon has been removed or pitch having a quinoline insoluble content of less than 1%. After kneading the mixture, the kneaded product is carbonized by firing at 1000°C or more in a non-oxidizing atmosphere, or further graphitized to produce composite particles.

Examples of the pitch include tar obtained by high-temperature pyrolysis of coal tar, ethylene bottom oil, crude oil, or the like, pitch obtained by subjecting asphalt or the like to distillation, thermal polycondensation, extraction, chemical polycondensation, and the like, pitch produced by dry distillation of wood, and the like. Pitch obtained by removing free carbon from such pitch is used, or pitch having a quinoline insoluble content of less than 1% is selected from such pitch. If free carbon remains in the pitch or the pitch has a quinoline insoluble content of more than 1%, since the pitch shows low crystallinity when graphitized, a lithium secondary battery having a reversible capacity of 250 mAh/g or more may not be obtained.

The pitch from which free carbon has been removed or the pitch having a quinoline insoluble content of less than 1% Is mixed in an amount of 30 to 120 parts by weight based on 100 parts by weight of the mixed powder. If the amount of the pitch is less than 30 parts by weight, the surface of the graphite powder particles may not be sufficiently covered with the pitch. As a result, since the specific surface area of the composite particles may not be sufficiently reduced, loss during charging/discharging may increase, whereby the initial efficiency may decrease.

If the amount of the pitch is more than 120 parts by weight, the surface of the graphite powder particles may be covered with the pitch to a large extent. As a result, since the reversible capacity of the graphite particles is impaired, the reversible capacity of the negative electrode material for lithium-ion secondary batteries may decrease. Moreover, since the specific surface area may increase due to the pitch, loss during charging/discharging may increase, whereby the initial efficiency may decrease.

The mixed powder and the pitch are sufficiently mixed and kneaded using an appropriate mixer such as a kneader. The kneaded product is placed in a container either directly or after granulation, and carbonized by firing at 1000°C or more in a non-oxidizing atmosphere, or further graphitized by heating at a temperature of more than 2500°C to produce composite particles shown in FIG. 1 in which the graphite powder particles, the carbon black, and the carbonized pitch are combined.

The composite particles thus produced are ground using a grinder (e.g., vibrating ball mill, jet grinder, roller mill, or Impact grinder). The ground product is classified using a classifier to adjust the grain size of the average particle diameter D50 to 8 to 15 µm.

The above-mentioned properties are measured using the following methods.

### (1) Average particle diameter

The average particle diameter is measured using a laser diffraction particle size distribution measuring instrument ("SALD 2000" manufactured by Shimadzu Corporation). The average particle diameter is indicated by a median diameter (µm) based on the volume.

### (2) Specific surface area

The specific surface area is measured by a BET method (adsorption gas: nitrogen) using a measuring instrument "GEMINI 2375" (manufactured by Shimadzu Corporation).

### (3) Arithmetic average particle diameter

A sample is dispersed in chloroform at a frequency of 28 kHz for 30 seconds using an ultrasonic disperser. The dispersed sample is secured on a carbon substrate. The sample is photographed using an electron microscope at a direct magnification of 10,000 and a total magnification of 100,000. The diameters of a thousand particles in the photograph are measured at random. The arithmetic average particle a diameter is calculated from a histogram at intervals of 14 nm.

### (4) DBP absorption

The DBP absorption is measured in accordance with JIS K 6217 ("Testing methods for fundamental properties of carbon black for rubber"),

### (5) (002) interlayer spacing d(002) and crystallite size Lc(004) in C-axis direction

A wide angle X-ray diffraction curve is obtained by a reflecting diffractometer method using CuKα rays made monochrome using a graphite monochromator. The (002) interlayer spacing d(002) and the crystallite size Lc(004) in the C-axis direction are determined by a Gakushin method.

Composite particles shown in FIG. 1 in which the graphite powder particles (core) are covered with the carbon black and the carbonized pitch, and a negative electrode material for lithium-ion secondary batteries which includes the composite particles, wherein the composite particles have an average particle diameter D50 of 8 to 15 µm and a specific surface area of 15 m²/g or less, are thus produced.

### EXAMPLES

The present invention is described in detail below by way of examples and comparative examples. Note that the following examples illustrate one embodiment of the present Invention, and should not be construed as limiting the present invention.

### Examples 1 to 12 and Comparative Examples 1 to 8

An artificial graphite powder, a natural graphite powder, or graphitized mosaic coke (Comparative Example 8) was used as a raw material graphite powder. The raw material graphite powder was ground using an air-stream grinder ("Counter Jet Mill 200AFG" manufactured by Hosokawa Micron Corporation). Particles having a diameter of 1 µm or less were removed by classification using an air-stream classifier ("200TTSP" manufactured by Hosokawa Micron Corporation) to prepare graphite powder particles having a different average particle diameter D50 and a different standard deviation. Furnace black having a different arithmetic average particle diameter and a different DBP absorption was used as carbon black. Pitch having a quinoline insoluble content of 1% or less was used as pitch. Table 1 shows the properties of the raw materials.

**TABLE 1**

| | | Graphite powder particle | | | | | Carbon black | | Pitch |
|---|---|---|---|---|---|---|---|---|---|
| | | Graphite | D50 (µm) | α ^{*1} (µm) | d(002) (nm) | Lc(004) (nm) | Particle diameter^{*2} (nm) | DBP (ml/100g) | Ql^{*3} (%) |
| | 1 | Artificial | 8.8 | 0.16 | 0.3358 | >100 | 122 | 42 | <0.1 |
| | 2 | Artificial | 8.8 | 0.16 | 0.3358 | >100 | 122 | 42 | <0.1 |
| | 3 | Artificial | 8.8 | 0.16 | 0.3358 | >100 | 122 | 42 | <0.1 |
| | 4 | Artificial | 8.8 | 0.16 | 0.3358 | >100 | 122 | 42 | <0.1 |
| | 5 | Artificial | 8.8 | 0.16 | 0.3358 | >100 | 66 | 68 | 0.5 |
| | 6 | Artificial | 8.8 | 0.16 | 0.3358 | >100 | 66 | 68 | 0.5 |
| Example | 7 | Artificial | 8.8 | 0.16 | 0.3358 | >100 | 66 | 68 | <0.1 |
| | 8 | Artificial | 8.8 | 0.16 | 0.3358 | >100 | 66 | 68 | <0.1 |
| | 9 | Artificial | 8.8 | 0.16 | 0.3358 | >100 | 62 | 140 | 0.7 |
| | 10 | Artificial | 8.8 | 0.16 | 0.3358 | >100 | 62 | 140 | 0.7 |
| | 11 | Natural | 7.7 | 0.19 | 0.3354 | >100 | 122 | 42 | <0.1 |
| | 12 | Natural | 7.7 | 0.19 | 0.3354 | >100 | 122 | 42 | <0.1 |
| | 1 | Artificial | 8.8 | 0.16 | 0.3358 | >100 | ^{*5} | ^{*3} | <0.1 |
| | 2 | Artificial | 8.8 | 0.16 | 0.3358 | >100 | 122 | 42 | <0.1 |
| | 3 | Artificial | 8.8 | 0.16 | 0.3358 | >100 | 122 | 42 | <0.1 |
| | 4 | Artificial | 8.8 | 0.16 | 0.3358 | >100 | 1.22 | 42 | <0.1 |
| Comparative | 5 | Artificial | 6.7 | 0.26 | 0.3358 | >100 | ^{*5} | ^{*3} | <0.1 |
| Example | 6 | Artificial | 8.8 | 0.16 | 0.3358 | >100 | 122 | 42 | 1.0 |
| | 7 | Artificial | 6.7 | 0.25 | 0.3358 | >100 | 122 | 42 | <0.1 |
| | 8 | ^{*4} | 8.6 | 0.18 | 0.337 | 20 | 122 | 42 | <0.1 |

| | | | | | | | | | |
|---|---|---|---|---|---|---|---|---|---|
| Note *1 Standard deviation *2 Arithmetic average particle diameter *3 Quinoline insoluble content, detection limit: 0.1 *4 Graphilized mosaic coke *5 Carbon black was not used. | | | | | | | | | |

The graphite powder particles, the carbon black, and the pitch were mixed in a weight ratio shown in Table 2, and sufficiently kneaded using a kneader. The kneaded product was carbonized by firing at 1000°C or 1600°C in a non-oxidizing atmosphere, atomized using a cyclone mill, and classified using a classifier to adjust the grain size to produce composite particles having a different average particle diameter and a different specific surface area.

**TABLE 2**

| | | Mixing ratio (parts by weight) | | | | Carbonization firing temperature (°C) |
|---|---|---|---|---|---|---|
| | | Graphite powder particles | Carbon black | Mixed powde^{*1} | Pitch | |
| | 1 | 25 | 75 | 3 | 35 | 1000 |
| | 2 | 25 | 75 | 3 | 50 | 1600 |
| | 3 | 40 | 60 | 15 | 35 | 1000 |
| | 4 | 40 | 60 | 15 | 50 | 1600 |
| | 5 | 25 | 75 | 3 | 40 | 1000 |
| | 6 | 25 | 75 | 3 | 0 | 1600 |
| Example | 7 | 40 | 60 | 15 | 40 | 1000 |
| | 8 | 40 | 60 | 15 | 60 | 1600 |
| | 9 | 25 | 75 | 3 | 70 | 1000 |
| | 10 | 25 | 75 | 3 | 120 | 1600 |
| | 11 | 25 | 75 | 3 | 35 | 1000 |
| | 12 | 25 | 75 | 3 | 50 | 1600 |
| | 1 | 100 | 0 | 0 | 35 | 1000 |
| | 2 | 20 | 80 | 4 | 35 | '000 |
| | 3 | 25 | 75 | 3 | 25 | 1000 |
| | 4 | 25 | 75 | 3 | 130 | 1600 |
| Comparative | 5 | 100 | 0 | 0 | 35 | 1000 |
| Example | 6 | 25 | 75 | 3 | 25 | 1000 |
| | 7 | 25 | 75 | 3 | 25 | 1000 |
| | 8 | 25 | 75 | 3 | 25 | 1600 |

| | | | | | | |
|---|---|---|---|---|---|---|
| Note *1 Carbon black/graphite powder particle weight ratio | | | | | | |

A battery was assembled using the composite particles thus produced as a negative electrode material. The battery characteristics were evaluated using the following methods. The results are shown in Table 3.

### Reversible capacity and initial efficiency

A three-electrode test cell was formed using lithium metal for a negative electrode and reference electrode and each graphite powder for a positive electrode. After constantly charging the lithium reference electrode (inserting lithium ions into graphite) up to 0.002 V, the lithium reference electrode was constantly discharged (lithium ions were extracted from graphite) up to 1.2 V. The ratio of the amount of discharging to the initial amount of charging was determined to be the initial efficiency. The charging/discharging process was then repeated under the same conditions. The reversible capacity per 1 g of graphite was calculated from the amount of electricity discharged (lithium ions were extracted from graphite) during the fifth cycle.

### Rapid discharge efficiency (rate)

A coin-type battery was produced. The discharged capacity when the battery was completely discharged from the full-charge state within five hours with a constant current (discharging current: 0.2C) was determined to be 100%. The discharge capacity when the battery was completely discharged within 30 minutes (discharging current: 2.0C) was calculated as a ratio with respect to the discharge capacity when the battery was completely discharged within five hours.

**TABLE 3**

| | | Properties of composite particle | | Properties of secondary battery | | |
|---|---|---|---|---|---|---|
| | | Average particle diameter D50 (µm) | Specific surface area (m²/g) | Reversible capacity (mAh/g) | Initial efficiency (%) | Rate (%) |
| | 1 | 13 | 9 | 295 | 85 | 87 |
| | 2 | 12 | 10 | 283 | 82 | 85 |
| | 3 | 13 | 6 | 299 | 87 | 85 |
| | 4 | 11 | 9 | 283 | 81 | 83 |
| | 5 | 12 | 10 | 278 | 80 | 82 |
| | 6 | 10 | 11 | 275 | 80 | 83 |
| Example | 7 | 13 | 8 | 280 | 81 | 84 |
| | 8 | 12 | 10 | 279 | 80 | 82 |
| | 9 | 13 | 12 | 286 | 82 | 83 |
| | 10 | 11 | 14 | 280 | 80 | 8' |
| | 11 | 10 | 7 | 300 | 83 | 82 |
| | 12 | 9 | 9 | 293 | 84 | 83 |
| | 1 | 9 | 6 | 310 | 87 | 70 |
| | 2 | 12 | 25 | 248 | 69 | 86 |
| | 3 | 13 | 20 | 250 | 71 | 84 |
| | 4 | 12 | 18 | 220 | 68 | 83 |
| Comparative Example | 5 | 9 | 13 | 300 | 79 | 72 |
| | 6 | 11 | 18 | 247 | 73 | 85 |
| | 7 | 12 | 21 | 276 | 68 | 82 |
| | 8 | 10 | 10 | 240 | 84 | 80 |

In Examples 1 to 12 according to the present invention, a high reversible capacity, a high initial efficiency, and a high rate profile were achieved. In Comparative Examples 1 and 5 in which carbon black was not used, the rate profile deteriorated although a high reversible capacity was obtained. In Comparative Example 2, the specific surface area increased since the weight ratio of the carbon black was high. As a result, the initial efficiency decreased. Moreover, the reversible capacity decreased due to the high weight ratio of the carbon black.

In Comparative Examples 3 and 7, since the amount of the pitch was small, the surface of the composite particles was not sufficiently covered. As a result, the initial efficiency decreased due to an increase in specific surface area. In Comparative Example 7 in which the graphite powder particles had a small particle diameter and a large standard deviation, the initial efficiency decreased to a large extent due to an increase in the effect of fine powder. In Comparative Example 4, since the ratio of the pitch-based component with a low degree of graphitization with respect to the composite particles increased, the reversible capacity decreased.

In Comparative Example 6, since the amount of the pitch was small, the surface of the composite particles was not sufficiently covered. As a result, the initial efficiency decreased due to an increase in specific surface area. Moreover, since the ratio of the component with a low degree of graphitization originating from the QI component contained in the pitch increased, the reversible capacity also decreased.

In Comparative Example 8, since the graphitized mosaic coke with a low degree of graphitization (i.e., the interlayer spacing and the crystallite size were small) was used as the core material, the reversible capacity decreased.

## Claims

1. A negative electrode material for lithium-ion secondary batteries comprising composite particles including graphite powder particles, carbon black, and a carbonized pitch , the composite particles having an average particle diameter D50 of 8 to 15 µm and a specific surface area of 15 m²/g or less, obtainable according to a process comprising mixing 100 parts by weight of a mixed powder with 30 to 120 parts by weight of pitch from which free carbon has been removed or pitch having a quinoline insoluble content of less than 1%,
the mixed powder being prepared by mixing graphite powder particles with carbon black in a weight ratio of 1:1.5 to 3.0, the graphite powder particles having an average particle diameter D50 of 3 to 10 µm and a standard deviation from the average particle diameter D50 of 0.2 µm or less.

2. A process of producing a negative electrode material for lithium-ion secondary batteries, the process comprising mixing 100 parts by weight of a mixed powder with 30 to 120 parts by weight of pitch from which free carbon has been removed or pitch having a quinoline insoluble content of less than 1%, the mixed powder being prepared by mixing graphite powder particles with carbon black in a weight ratio of 1:1.5 to 3.0, the graphite powder particles having an average particle diameter D50 of 3 to 10 µm and a standard deviation from the average particle diameter D50 of 0.2 µm or less, kneading the mixture, and carbonizing the kneaded product by firing at 1000°C or more in a non-oxidizing atmosphere, or further graphitizing the kneaded product and grounding and classifying the kneaded product to adjust the grain size of the average particle diameter D50 to 8 to 15 µm.

3. The process according to claim 2, wherein the graphite powder particles have a crystallite size Lc(004) in a C-axis direction of 100 nm or more and a (002) interlayer spacing d(002) of less than 0.338 nm.

4. The process according to claim 2 or 3, wherein the carbon black has an arithmetic average particle diameter of 50 to 200 nm and a DBP absorption of 40 to 155 ml/100 g.

## Patentansprüche

1. Negativelektrodenmaterial für Lithiumionen-Sekundärbatterien, umfassend Verbundteilchen, welche Graphitpulverteilchen, Ruß und ein verkoktes Pech enthalten, wobei die Verbundteilchen einen durchschnittlichen Teilchendurchmesser D50 von 8 bis 15 µm und eine spezifische Oberfläche von 15 m²/g oder weniger aufweisen, herstellbar gemäß einem Verfahren, welches das Mischen von 100 Gewichtsteilen eines Pulvergemisches mit 30 bis 120 Gewichtsteilen Pech, aus welchem freier Kohlenstoff entfernt wurde, oder Pech, das einen chinolinunlöslichen Gehalt von weniger als 1 % aufweist, umfasst, wobei das Pulvergemisch durch Mischen von Graphitpulverteilchen mit Ruß, in einem Gewichtsverhältnis von 1:1,5 bis 3,0, hergestellt wird und die Graphitpulverteilchen einen durchschnittlichen Teilchendurchmesser D50 von 3 bis 10 µm sowie eine Standardabweichung vom durchschnittlichen Teilchendurchmesser D50 von 0,2 µm oder weniger aufweisen.

2. Verfahren zur Herstellung eines Negativelektrodenmaterials für Lithiumionen-Sekundärbatterien, umfassend das Mischen von 100 Gewichtsteilen eines Pulvergemisches mit 30 bis 120 Gewichtsteilen Pech, aus welchem freier Kohlenstoff entfernt wurde, oder Pech, das einen chinolinunlöslichen Gehalt von weniger als 1 % aufweist, wobei das Pulvergemisch durch Mischen von Graphitpulverteilchen mit Ruß, in einem Gewichtsverhältnis von 1:1,5 bis 3,0, hergestellt wird und die Graphitpulverteilchen einen durchschnittlichen Teilchendurchmesser D50 von 3 bis 10 µm und eine Standardabweichung vom durchschnittlichen Teilchendurchmesser D50 von 0,2 µm oder weniger aufweisen, das Kneten der Mischung und das Verkoken des gekneteten Produktes durch Brennen, bei 1000 °C oder mehr, in nichtoxidierender Atmosphäre, oder des Weiteren Graphitieren des gekneteten Produktes und Mahlen und Klassieren des gekneteten Produktes zur Einstellung der Korngröße des durchschnittlichen Teilchendurchmessers D50 auf 8 bis 15 µm.

3. Verfahren nach Anspruch 2, bei welchem die Graphitpulverteilchen eine Kristallitgröße Lc(004) in einer C-Achsenrichtung von 100 nm oder mehr und einen (002)-Schichtenabstand d(002) von weniger als 0,338 nm aufweist.

4. Verfahren nach Anspruch 2 oder 3, bei welchem der Ruß einen arithmetischen durchschnittlichen Teilchendurchmesser von 50 bis 200 nm und eine DBP-Absorption von 40 bis 155 ml/100 g aufweist.

## Revendications

1. Matériau d'électrode négative pour accumulateurs au lithium-ion comprenant des particules composites incluant des particules de poudre de graphite, du noir de carbone et un brai calciné, les particules composites ayant un diamètre moyen de particules D50 de 8 à 15 µm et une surface spécifique de 15 m²/g ou moins, pouvant être obtenu conformément à un procédé comprenant le mélange de 100 parties en poids d'une poudre mixte avec 30 à 120 parties en poids d'un brai duquel le carbone libre a été éliminé ou d'un brai ayant une teneur insoluble de quinoléine de moins de 1 %,
la poudre mixte étant préparée en mélangeant des particules de poudre de graphite avec du noir de carbone dans un rapport pondéral de 1:1,5 à 3,0, les particules de poudre de graphite ayant un diamètre moyen de particules D50 de 3 à 10 µm et un écart-type par rapport au diamètre moyen de particules D50 de 0,2 µm ou moins.

2. Procédé de production d'un matériau d'électrode négative pour accumulateurs au lithium-ion, le procédé comprenant le mélange de 100 parties en poids d'une poudre mixte avec 30 à 120 parties en poids d'un brai duquel le carbone libre a été éliminé ou d'un brai ayant une teneur insoluble de quinoléine de moins de 1%, la poudre mixte étant préparée en mélangeant des particules de poudre de graphite avec du noir de carbone dans un rapport pondéral de 1:1,5 à 3,0, les particules de poudre de graphite ayant un diamètre moyen de particules D50 de 3 à 10 µm et un écart-type par rapport au diamètre moyen de particules D50 de 0,2 µm ou moins, le malaxage du mélange, et la calcination du produit malaxé par cuisson à 1 000°C ou plus dans une atmosphère non oxydante, ou en outre la graphitation du produit malaxé et le broyage et le classement du produit malaxé pour ajuster la taille de grain du diamètre moyen de particules D50 à 8 à 15 µm.

3. Procédé selon la revendication 2, dans lequel les particules de poudre de graphite ont une taille de cristallites Lc (004) dans le sens d'un axe C de 100 nm ou plus et un espacement intercouches (002) d(002) de moins de 0,338 nm.

4. Procédé selon la revendication 2 ou 3, dans lequel le noir de carbone a un diamètre moyen arithmétique de particules de 50 à 200 nm et une absorption de DBP de 40 à 155 ml/100 g.
